Europäisches Patentamt

European Patent Office

Office européen des brevets

(11) Veröffentlichungsnummer: **0 276 013**
A2

# (12) EUROPÄISCHE PATENTANMELDUNG

(21) Anmeldenummer: 88100933.6

(22) Anmeldetag: 22.01.88

(51) Int. Cl.[4]: **A 01 N 65/00**
B 01 D 11/00

(30) Priorität: 22.01.87 DE 3701824

(43) Veröffentlichungstag der Anmeldung:
27.07.88 Patentblatt 88/30

(84) Benannte Vertragsstaaten:
AT BE CH DE ES FR GB GR IT LI LU NL SE

(71) Anmelder: Inter-Mittex AG
Löwenstrasse 16
CH-8021 Zürich (CH)

(72) Erfinder: Hussmann, Peter, Dr.
Via dei Pucci 4
I-50100 Florenz (IT)

(74) Vertreter: Haug, Dietmar et al
Patentanwälte Andrae, Flach, Haug Steinstrasse 44
D-8000 München 80 (DE)

(54) Verfahren zur Entbitterung der Samenkörner von Bitterlupinen.

(57) Die Erfindung betrifft ein Verfahren zur Entbitterung der Samenkörner von Bitterlupinen, wobei durch ein bei 5 bis 15°C unter partiellem Luftabschluß und unter Einsatz von $SO_2$ stufenweise durchgeführtes, eine Extraktionsphase aufweisendes Trennverfahren nach dem Gegenstromprinzip mit wäßrigen, zuvor angereicherten Extraktlösungen abnehmender Konzentration aus den zuvor gemahlenen Samenkörnern ein bitterstoffhaltiger Lupinenextrakt und eine entbitterte protein-und fetthaltige Masse gewonnen werden. Der Lupinenextrakt wird nach der Extraktion bei einer unterhalb von 35°C bis 40°C liegenden Temperatur unter Einwirkung von Luft fermentiert, wobei sein pH-Wert um 0,2 bis 0,5 ansteigt. Die ertrags-und wachstumssteigernde Wirkung des Lupinenextraktes auf Pflanzen wird erheblich gesteigert und die Proteinverluste werden erheblich verringert.

EP 0 276 013 A2

Bundesdruckerei Berlin

## Beschreibung

### Verfahren zur Entbitterung der Samenkörner von Bitterlupinen

Die Erfindung betrifft ein Verfahren zur Entbitterung der Samenkörner von Bitterlupinen, wobei durch ein bei einer nicht über Raumtemperatur liegenden Temperatur stufenweise durchgeführtes, eine Extraktionsphase aufweisendes Trennverfahren nach dem Gegenstromprinzip mit wäßrigen, zuvor angereicherten, als Extraktionsflüssigkeit dienenden Extraktlösungen abnehmender Konzentration aus den zuvor gemahlenen Samenkörnern ein bitterstoffhaltiger Lupinenextrakt und eine entbitterte protein- und fetthaltige Masse als Extraktionsrückstand gewonnen werden.

Ein solches Verfahren ist aus der EP-A-84 547 bekannt. Bei diesem Verfahren ist man bestrebt, die Extraktion so schnell wie möglich durchzuführen, um eine Fermentation des Lupinenextraktes zu vermeiden. Zu diesem Zweck werden bei diesem Verfahren die Bitterlupinenbohnen oder Samenkörner zunächst naß fein- oder feinstgemahlen, so daß ihre Partikelgröße 50 µm nicht überschreitet, und dann in sehr dünnen Schichten bis zu einer maximalen Höhe von 50 mm mit Hilfe von mehreren Flachbettextraktoren in einer Vielzahl von Extraktionsstufen der Extraktion unterworfen. Es hat sich jedoch gezeigt, daß sofort nach der Hydratisierung der Bitterlupinen eine Fermentation einsetzt. Mit dem nach dem bekannten Verfahren gewonnenen Lupinenextrakt sind bereits erstaunliche Wachstums- und Ertragssteigerungen bei den verschiedensten Kulturpflanzen erzielt worden.

Die Aufgabe der Erfindung besteht darin, das gattungsgemäße Verfahren dahn gehend zu verbessern, daß der Lupinenextrakt eine noch bessere wachstums- und ertragssteigernde Wirkung auf Pflanzen hat.

Die Aufgabe der Erfindung wird dadurch gelöst, daß der bitterstoffhaltige Lupinenextrakt bei einer unterhalb von 35°C bis 40°C liegenden Temperatur unter Einwirkung von Luft fermentiert wird.

Im Gegensatz zu der dem bekannten Verfahren zugrundeliegenden Auffassung, eine Fermentation des Lupinenextraktes sei schädlich und durch einen raschen Verfahrensablauf möglichst zu vermeiden, wird erfindungsgemäß der Lupinenextrakt nach der Extraktion gezielt einer um ein Vielfaches erhöhten Fermentation unterworfen. Es hat sich in Versuchen gezeigt, daß der erfindungsgemäß gewonnene Lupinenextrakt bei Applikation an Kulturpflanzen eine starke wuchs- und insbesondere erntesteigernde Wirkung hat. Bei Anwendung des erfindungsgemäß gewonnenen Lupinenextraktes in Form einer Mischung aus Lupinenextraktpulver und Wasser im Verhältnis von 1 : 50 bis 1 : 1000 sind bei Kartoffeln, Tomaten, Erdnüssen (Arrachiden) statt 20%, 30 bis 40% größere Erträge festgestellt worden. Es ist auch hervorzuheben, daß bei einer Applikation des erfindungsgemäß gewonnenen Lupinenextraktes von 100 bis 200 kg/ha, statt 20 bis 30 kg/ha, keine negativen Folgen im Sinne einer Schädigung der Kulturpflanzen aufgetreten sind.

Außer den Erntesteigerungen an Kulturpflanzen konnte aber auch mit dem erfindungsgemäß fermentierten Lupinenextrakt erstaunliche Wachstumssteigerungen bei Grünpflanzen, Sträuchern und Bäumen beobachtet werden. Sogar kranke Margeritensträucher, die am Eingehen waren, konnten im Verlauf mehrerer Applikationen gesunden. Aus Kiefernbaumsamen ausgesäte Kiefern wiesen im Vergleich mit nichtbehandelten Kiefern eine 20fache und größere Wachstumssteigerung auf. Versuche in Kalabrien zeigten ebenfalls, daß der erfindungsgemäß gewonnene Lupinenextrakt zu einem schnelleren und besseren Wachstum führt.

Obwohl erkannt worden ist, daß eine Fermentation des Lupinenextraktes nicht schädlich, sondern geradezu förderlich ist, wird aus Gründen der besseren Steuerungs- und Kontrollmöglichkeit die Fermentation erst nach der Extrak tion und in verstärktem Maße durchgeführt und ist jede Fermentation vor oder während der Extraktion nach wie vor zu vermeiden. In Versuchen hat sich gezeigt, daß die Wirkung des Lupinenextraktes auf Wachstum und Ertrag von Pflanzen am besten ist, wenn die Fermentation nicht zu weit getrieben wird. Nach einer Weiterbildung der Erfindung wird daher der Lupinenextrakt nach der Extraktion nur solange der Fermentation ausgesetzt, bis sein pH-Wert um 0,2 bis 0,5 gestiegen ist. Um das Einsetzen von enzymatischen Abläufen bereits vor der eigentlichen Fermentation zu vermeiden, wird die Trennung nach einer Weiterbildung der Erfindung zumindest unter partiellem Luftabschluß, bei einer Temperatur von 5 bis 15°C und unter Einsatz von $SO_2$ durchgeführt.

Im Gegensatz zu dem bekannten Verfahren, bei dem die Trennung nur durch eine mehrstufige Extraktion durchgeführt wurde, umfaßt das Trennverfahren nach einer Weiterbildung der Erfindung eine ein- oder mehrstufige Extraktionsphase in einem stationären Flachbettfilterextraktor, der eine mehrstufige Dekantationsphase in geschlossenen Dekantationsbehältern nachgeschaltet ist. Diese Zweiteilung des Trennverfahrens hat nicht nur den Vorteil, daß jede Fermentation zumindest während der Dekantationsphase vollständig ausgeschlossen werden kann, sondern daß auch Investitions- und Betriebskosten in erheblichem Maße eingespart werden können. Außerdem ergibt sich der Vorteil, daß der Verlust an Proteinen weit geringer ist als bei dem bekannten Verfahren.

Vorzugsweise erfolgt die Abtrennung in der Extraktionsphase über ein Filtermedium, das aus einem Filterboden und einer auf ihn anfänglich in einer Höhe von 150 bis 200 mm aufgebrachten sich selbst filtrierenden Schicht eines Gemisches aus gemahlenen Lupinensamenkörnern und der jeweils höchstkonzentrierten Lupinenextraktlösung besteht. Im Gegensatz zu der bei dem bekannten Verfahren durchgeführten Dünnschichtextraktion wird bei dem erfindungsgemäßen Verfahren mit einer 6 bis 8 mal höheren Schicht extrahiert, wodurch zwar längere Extraktionszeiten in Kauf genommen werden müssen, die Filtration aber wesentlich effektiver wird. Die Schicht, die eine selbstfiltrierende Wirkung hat, erlaubt es, daß sehr klare Lösungen abgezogen werden könne, die keine Schweb- oder Trübstoffe, die meist Proteinpartikel darstellen, mehr aufweisen. Außerdem können erhebliche Extraktionsflächen eingespart werden. Des weiteren ergibt die Schicht von 150 bis 200 mm eine um einen Faktor 5 bis 10 kleinere Kontaktfläche der gesamten Masse auf dem Flachbettextraktor. Da die enzymatischen Abläufe nur an der der Luft ausgesetzten Oberfläche der Schicht sich abspielen, wird die kaum zu unterbindende Fermentation im Extraktor auf ein Minimum beschränkt. Die in sehr dünnen Schichten gefahrene Flachbettextraktion bei dem bekannten Verfahren bedeutet, daß sehr große Oberflächen gebildet werden. Da bei den großen Flächen technisch nur sehr schwer ein Luftabschluß wirtschaftlich möglich ist, bedeuten die Flächen Luftkontakt und damit Sauerstoffaufnahme, die das bakterielle Leben begünstigt.

Die sich beim erfindungsgemäßen Verfahren an die Extraktionsphase anschließende Dekantationsphase erfolgt praktisch fast ganz unter Luftabschluß im geschlossenen Dekantationszyklus. Die tiefen Temperaturen von 5 bis 15°C können infolgedessen gut eingehalten werden. Es ergibt sich eine sehr viel größere Steuerungs- und Kontrollmöglichkeit der nun im Vordergrund stehenden enzymatischen Abläufe. Insbesondere gehen weniger die durch Enzyme sich in Aminosäuren aufspaltende Proteine verloren.

Anstelle einer Fein- oder Feinstmahlung der Lupinenbohnen, wie sie bei dem bekannten Verfahren vorgenommen wird, werden erfindungsgemäß die Lupinensamenkörner vor der Extraktion zu Grieß mit Einzelpartikelgrößen von 0,2 bis 0,8 mm trocken vermahlen, die vermahlenen Lupinen anschließend mit der höchstkonzentrierten Extraktlösung vermischt und wird das Gemisch mindestens eine Stunde lang unter Rühren reagieren gelassen, bevor es der Extraktion unterworfen wird. Auch durch diese Maßnahme wird die zu diesem Zeitpunkt unerwünschte Fermentation weitgehend eingeschränkt oder vermieden. Die größere Vermahlung der Lupinenbohnen führt auch zu einer schnelleren Extraktion, wobei gleichzeitig die Entbitterung der Lupinenbohnen auf einen Restbitterstoffgehalt von 0,005% sichergestellt ist.

Weitere Vorteile und Merkmale der Erfindung ergeben sich aus der folgenden detaillierten Beschreibung verschiedener Varianten des gesamten Verfahrensablaufes nach der Erfindung.

## 1. Verfahrensvariante

Die zu entbitternden Samenkörner von Bitterlupinen, auch Bitterlupinenbohnen genannt, werden zu Grieß mit Einzelpartikelgrößen von 0,2 bis 0,8 mm in einer Mehrwalzenmühle mit verschiedenen Geschwindigkeiten ohne Erwärmung trocken vermahlen. Anschließend werden sie mit der aus der ersten Dekantationsstufe gewonnenen, höchstkonzentrierten Lupinenextraktlösung im Verhältnis 1:4 bis 1:7 vermischt und in Reaktion gebracht, die in einem Mischgefäß stattfindet, das mit einem langsam laufenden Rührwerk ausgestattet ist. Um einen effizienten Stoffaustausch zu erhalten, läßt man die Reaktion 1 bis 2 Stunden dauern. Die Konzentration der erhaltenen bitterstoffreichen Lupinenextraktlösung wird hierdurch auf 32 bis 38% gebracht.

Das Gemisch wird auf den Flachbettextraktor über eine Pumpe und Rohrleitungen in einer Höhe von 150 bis 200 mm aufgebracht. Bis zur Klarfiltration bedarf es eines ein-oder mehrmaligen Umpumpens der durch Unterdruck abzusaugenden Lösungen. Die hohe poröse Schicht bildet ein sich selbstfiltrierendes Filtermedium, das nach höchstens zwei bis dreimaligem Umpumpen eine solche Filterstruktur erhält, daß sehr klare Lösungen abgezogen werden können, die keine Schweß- oder Trübstoffe, die meist Proteinpartikel darstellen, meh aufweisen.

Obwohl im Gegensatz zu der Dünnschichtextraktion dieses Vorgehen lange Zeiten benötigt, ist ein großer Vorteil damit verbunden. Es können nämlich erhebliche Extraktionsflächen eingespart werden. Extraktionsflächen werden auch durch die anschließende Dekantationsphase eingespart. So kann z.B. die Flachbettextraktionsfläche einer Anlage mit einer Jahreskapazität von 10 000 jato Lupinen, d.h. rd. 1 400 kg/h,auf ein Viertel verkleinert werden, d.h. 800 m$^2$ gegenüber 3 200 m$^2$, wobei allein durch die Dekantationsphase 1 600 m$^2$ und durch das neue Konzept der Extraktion nochmals 800 m$^2$ eingespart werden.

Die anschließende, im Gegenstrom erfolgende Dekantationsphase, in der jeder Dekantor mit einem Rührwerk versehen ist, das durch die Bewegung nicht nur eine aufschließende Zerfaserung und langsame Zerkleinerung der Partikel ermöglicht, sondern insbesondere den Stoffaustausch wesentlich erleichtert, ist wirtschaftlich in der Investition und erheblich günstiger in den Betriebskosten. Die Dekantation wird in mehreren miteinander verschalteten luftdicht abgeschlossenen Behältern durchgeführt, die jeweils mit dem Extraktor und dem Mischgefäß verbunden sind.

Die nach dem letztmaligen Absaugen der weiter mit Extraktivstoffen angereicherten Extraktlösung auf dem Filterboden des Extraktors zurückbleibende protein- und fetthaltige Masse wird nun dem Behälter der ersten Dekantationsstufe zugeführt, in welchem sie mit der Extraktlössung der zweiten Dekantationsstufe vermischt wird. Die Extraktlösung der dritten Dektantationsstufe wird in den Behälter der zweiten Dekantationsstufe geführt, wo sie mit dem Rückstand vermischt wird. Ebenso werden die immer schwächer werdenden Extraktlösungen der restlichen Dekantationsstufen in die jeweiligen Behälter der nächstniedrigeren Dekantationsstufe geführt. Der Rückstand der letzten Dekantationsstufe wird nach eventuell nochmaligem Auslaugen mit reinem Wasser entfeuchtet und stellt dann eine protein- und fetthaltige Masse dar, die nur noch einen Alkaloidrestgehalt von höchstens 0,005% hat. Das nochmalige Auslaugen der Masse der letzten Dekantationsstufe kann auch auf dem Extraktor erfolgen.

Die in der ersten oder einzigen Extraktionsstufe gewonnene Extraktlösung wird der Fermentation unterworfen, während die Extraktlösung der ersten Dekantationsstufe, die, abgesehen von der der Fermentation zugeführten Lösung, die höchstkonzentrierte Lösung darstellt, dem Mischgefäß zugeführt wird, in welchem sie mit den von der Mühle kommenden vermahlenen Lupinensamenkörnern zur Reaktion gebracht wird.

Es ist nicht erforderlich, daß in der Dekantationsphase alle Trübstoffe erfaßt werden, da in der beschriebenen Flachbettextraktionsstufe alle diese Trübstoffe erfaßt und im Filterkuchen, d.h. in den protein- und fetthaltigen Massen, zurückgehalten werden. Auf diese Weise gelingt es, eine Eindämmung der Proteinverluste bis zu 20% zu erzielen.

Für die an die Extraktionsphase sich anschließende Fermentation genügt ein Proteingehalt von 30 bis 40% im Alkaloidextrakt. Die gesamte Extraktion und Dekantation wird bei einer Temperatur von 5 bis 10 °C durchgeführt. Außerdem wird $SO_2$ zugeführt, um bakterielle Kettenreaktionen partiell zu blockieren. Durch die bis jetzt beschriebenen Maßnahmen des erfindungsgemäßen Verfahrens werden nicht nur die Protein-Fettgranulate in besserer Qualität erhalten, sondern die sich anschließenden Fermentationsreaktionen laufen günstiger und kontrollierter ab.

Der aus der ersten und einzigen Extraktionsstufe gewonnene Extrakt, der neben Alkaloiden 30 bis 40% Proteine und 10 bis 12% Mineralstoffe sowie weitere Begleitstoffe enthält, wird nun der Fermentation unterworfen. Dieser Fermentationsprozeß kann ähnlich wie bei der Produktion von Antibiotika in Oberflächen- oder belüfteten, geschlossenen Systemen von Fermentern erfolgen. Auch eine kontinuierliche Biosynthese ist möglich. Es ist eine Frage des Zeitaufwandes, ob die Fermentation bei den gleichen Temperaturen wie die vorausgegangenen Extraktions- und Dekantationsphasen durchgeführt wird oder die Temperatur auf 20 bis 30°C angehoben wird und ob sie in geschlossenen oder offenen Fermentern, mit oder ohne Belüftung, ablaufen gelassen wird. Die Temperatur sollte jedoch nitcht über 35°C liegen, da Enzyme Temperaturen über 35 bis 40°C nicht vertragen.

Den Grad der Fermentation kann man durch die Geruchsentwicklung und gelblich-bräunliche Verfärbungen grob feststellen. Eine genauere Messung ist über eine Kontrolle der Wasserstoffionenkonzentration möglich. Die Fermentation wird erfindungsgemäß so weit getrieben, daß der pH-Wert um 0,2 bis 0,5, z.B. von 4,8 auf 5 oder von 5 auf 5,4, ansteigt.

Die sich an die Fermentation anschließende Dehydratation des Lupinenextraktes wird bei 20 bis 30°C schonend mit entfeuchteter Luft oder mit Inertgas vorgenommen, wobei die vorher auf 32 bis 38% Trockensubstanz gesteigerten Extrakte ohne jede Schädigung fixiert und getrocknet werden.

## 2. Verfahrensvariante

Die zu entbitternden Samenkörner von Bitterlupinen werden zu Grieß mit Einzelpartikelgrößen von 0,2 bis 0,8 mm in einer Mehrwalzenmühle mit verschiedenen Geschwindigkeiten ohne Erwärmung trocken vermahlen. Anschließend werden sie mit der aus der ersten Extraktionsstufe gewonnenen, höchstkonzentrierten Lupinenextraktlösung im Verhältnis 1:4 bis 1:7 vermischt und in Reaktion gebracht, die in einem Mischgefäß stattfindet, das mit einem langsam laufenden Rührwerk ausgestattet ist. Um einen effizienten Stoffaustausch zu erhalten, läßt man die Reaktion 1 bis 2 Stunden dauern. Die Konzentration der erhaltenen bitterstoffreien Lupinenextraktlösung wird hierdurch auf 32 bis 38% gebracht.

Diese Suspension wird zu Abtrennung der Extraktlösung einer ersten Filtrationsstufe, einem unter Vakuum arbeitenden Band-oder Drehfilter, aufgegeben.

Der so gewonnene Filterkuchen durchläuft eine anschließende mehrstufige Extraktion im Gegenstrom, die im wesentlichen in mehreren geschlossenen Reaktionsbehältern mit Rührern und wiederum einem oder mehreren Band- oder Drehfiltern durchgeführt wird, der sogenannten zweiten Filtrationsstufe.

In den Reaktionsbehältern der Extraktion werden die Suspensionen so lange gerührt, bis sich ein Konzentrationsgleichgewicht pro Stufe eingestellt hat, was je nach Extraktionsstufe eine Reaktionszeit von wenigen Minuten bis zu max. 30 min benötigt.

Nach Erreichen des Konzentrationsgleichgewichtes wird die Suspension einem oder mehreren unter Vakuum arbeitenden Band- oder Drehfiltern zur Trennung des Extraktes von Feststoff aufgegeben. Diese Abrennung erfolgt so schnell, daß mehrere Reaktionsbehälter mit einem Band- oder Drehfilter zusammengeschaltet wrden können.

Vergleicht man in der Gegenstromextraktion das System Reaktionsbehälter und Filter zur Abtrennung des Feststoffes mit der Durchführung der Extraktion in mehreren hintereinander geschalteten Dekantierbehältern, so reduziert sich die Verweilzeit per Extraktionsstufe wesentlich, da beim Dekantierbehälter die Absetzzeit des Feststoffes (Sediment) die bestimmende Größe ist.

Die Anzahl der Reaktionsbehälter richtet sich nach der erforderlichen Zahl der Extraktionsstufen, um den Feststoff auf den gewünschten Restalkaloidwert zu extrahieren.

Die Suspension aus dem letzten Reaktionsbehälter wird einem unter Vakuum arbeitenden Band- oder Drehfilter, der sogenannten dritten Filtrationsstufe, aufgegeben, das neben einer Fil trationszone zur Abtrennung des Extraktes noch über eine oder mehrere Waschzonen verfügt. Hier wird Frischwasser zur Waschung des Filterkuchens aufgegeben, das durch die Prozeßführung im Gegenstrom gleichzeitig als Lösungsmittel für den Alkaloidextrakt dient.

Der extrahierte Filterkuchen, ein protein- und fetthaltiger Feststoff mit einem Restalkaloidgehalt von 0,02 Gew.-% und darunter, wird anschließend mechanisch entwässert, granuliert und getrocknet. Er findet als hochwertiges protein- und fetthaltiges Futtermittel oder Nahrungsmittel Verwendung.

Die in der ersten Filtrationsstufe gewonnene Extraktlösung wird der Fermentation, wie bei der 1. Verfahrensvariante, unterworfen, während die Extraktlösung der ersten Extraktionsstufe, die, abgesehen von der der Fermentation zugeführten Lösung, die höchstkonzentrierte Lösung darstellt, dem Mischgefäß zugeführt wird, in welchem sie mit den von der Mühle kommenden vermahlenen Lupinenextraktkörnern zur Reaktion gebracht wird.

Um die Extraktlösung, die der Fermentation zugeführt wird, von evtl. eingeschlossenen Trübstoffen zu befreien, wird sie einer weiteren Klärfiltration evtl. unter Zugabe eines Filterhilfsmittels unterzogen.

### 3. Verfahrensvariante

Alternativ zu dem System geschlossene Reaktionsbehälter und Band- oder Drehfilter kann bei der Gegenstromextraktion auch ein System Kipp- und Drehfilter und geschlossene Vorlagebehälter pro Extraktionsstufe eingesetzt werden. Hierbei bleibt der Feststoff während des gesamten Extraktionsvorganges in einem oder mehreren Kpp- und Drehfiltern während die Extrakte der verschiedenen Extraktionsstufen so lange im Kreislauf über den Kipp- und Drehfilter gepumpt werden, bis sich die Gleichgewichtskonzentration der jeweiligen Extraktionsstufe eingestellt hat.

Nach Ablauf des Extraktionsvorganges wird der extrahierte Filterkuchen dem Filter entnommen, ebenfalls mechanisch entwässert, granuliet und getrocknet.

Bei der Anwendung des Lupinenextraktes zur Wachstums-und Ertragssteigerung von Kulturpflanzen wird der Blattapplikation wegen der besseren Ergebnisse der Vorzug gegeben. Bei der Blattapplikation beginnen die durch die Dehydratation blokkierten enzymatischen Reaktionen sofort wieder bei der Auflösung und Verdünnung mit Wasser aktiv zu werden. Diese Aktivierung setzt sich weiter fort auf den Blättern der Pflanze oder z.B. auch an den Wurzeln der Bäume über die Erde.

### Patentansprüche

1. Verfahren zur Entbitterung der Samenkörner von Bitterlupinen, wobei durch ein bei einer nicht über Raumtemperatur liegenden Temperatur stufenweise durchgeführtes, eine Extraktionsphase aufweisendes Trennverfahren nach dem Gegenstromprinzip mit wäßrigen, zuvor angereicherten, als Extraktionsflüssigkeit dienenden Extraktlösungen abnehmender Konzentration aus den zuvor gemahlenen Samenkörnern ein bitterstoffhaltiger Lupinenextrakt und eine entbitterte protein- und fetthaltige Masse als Extaktionsrückstand gewonnen werden, dadurch gekennzeichnet, daß der bitterstoffhaltige Lupinenextrakt bei einer unterhalb von 35°C bis 40°C liegenden Temperatur unter Einwirkung von Luft fermentiert wird.

2. Verfahren nach Anspruch 1, dadurch gekennzeichnet, daß der Lupinenextrakt so lange der Fermentation ausgesetzt wird, bis sein pH-Wert um 0,2 bis 0,5 gestiegen ist.

3. Verfahren nach Anspruch 1 oder 2, dadurch gekennzeichnet, daß die Trennung zumindest unter partiellem Luftabschluß, bei einer Temperatur von 5 bis 15°C und unter Einsatz von $SO_2$ durchgeführt wird.

4. Verfahren nach Anspruch 3, dadurch gekennzeichnet, daß das Trennverfahren eine ein- oder mehrstufige Extraktionsphase in einem stationären Flachbettfilterextraktor umfaßt, der eine mehrstufige Dekantationsphase in geschlossenen Dekantationsbehältern nachgeschaltet ist.

5. Verfahren nach Anspruch 4, dadurch gekennzeichnet, daß in der Extraktionsphase die Abtrennung in dem Flachbettfilterextraktor über ein Filtermedium erfolgt, das aus einem Filterboden und einer auf ihn anfänglich in einer Höhe von 150 bis 200 mm aufgebrachten, sich selbst filtrierenden Schicht eines Gemisches aus gemahlenen Lupinensamenkörnern und der jeweils höchst konzentrierten Lupinenextraktlösung besteht.

6. Verfahren nach Anspruch 5, dadurch gekennzeichnet, daß die über das Filtermedium abgetrennte Lupinenextraktlösung einmal oder mehrmals rezirkuliert wird, bevor sie der Fermentation unterworfen wird.

7. Verfahren nach einem der vorhergehenden Ansprüche, dadurch gekennzeichnet, daß die Lupinensamenkörner vor der Extraktion zu Grieß mit Einzelpartikelgrößen von 0,2 bis 0,8 mm trocken vermahlen werden, die vermahlenen Lupinensamenkörner anschließend mit der höchstkonzentrierten Extraktlösung vermischt werden und das Gemisch mindestens eine Stunde lang unter Rühren reagieren gelassen wird, bevor es der Extraktion unterworfen wird.

8. Verfahren nach einem der Ansprüche 4 bis 7, dadurch gekennzeichnet, daß die der Dekantation unterworfenen Gemischmengen aus teilweise entbitterten Lupinensamenkörnern und der jeweiligen Extaktlösung einmal oder mehrmals einige Minuten lang gerührt werden.

9. Verfahren nach einem der vorhergehenden Ansprüche, dadurch gekennzeichnet, daß der bei der ersten Extraktionsstufe gewonnene Lupinenextrakt mit entfeuchteter Luft oder Inertgas bei einer Temperatur von 20 bis 30°C zu Pulver dehydratisiert wird, und die Fermentation vor oder nach der Dehydratation erfolgt.

10. Verfahren nach Anspruch 1, dadurch gekennzeichnet, daß das Trennverfahren eine Filtrationsstufe aufweist, in der eine aus gemahlenen Samenkörnern und einer höchstkonzentrierten Extraktlösung bestehende Suspension einem unter Vakuum arbeitenden Band- oder Drehfilter aufgegeben wird, wobei eine weiter angereicherte Extraktlösung, die der Fermentation zugeführt wird, und ein Filterkuchen gewonnen werden, der einer mehrstufigen Extraktion im Gegenstrom unterzogen wird, die in mehreren geschlossenen Reaktionsbehältern mit Rührern und einem oder mehreren weiteren Band- oder Drehfiltern durchgeführt wird.

11. Fermentierter Lupinenextrakt erhältlich nach dem Verfahren gemäß einem der vorhergehenden Ansprüche.

12. Verwendung des fermentierten Lupinenextraktes für die Blattapplikation an Kulturpflanzen zur Ernte- und Wachstumssteigerung und

Heilung ihrer Krankheiten.